# EUROPEAN PATENT SPECIFICATION

(11) **EP 1 843 017 B1**
(45) Date of publication and mention of the grant of the patent: **15.12.2010**
(21) Application number: 07006977.8
(22) Date of filing: 03.04.2007
(51) Int. Cl.: B01J 35/00, B01J 37/10, B01J 37/02, F01N 13/10, F01N 3/28, F02F 1/42

(54) **Exhaust gas purification apparatus**
Abgasreinigungsvorrichtung
Appareil de purification des gaz d'échappement

(30) Priority: 03.04.2006 JP 2006102545
(43) Date of publication of application: 10.10.2007
(73) Proprietor: HONDA MOTOR CO., LTD., Tokyo 107-8556 (JP)
(72) Inventor: Ohkubo, Hirosuke, c/o Honda R&D Co., Ltd, Saitama 351-0193 (JP); Iwamoto, Takashi, c/o Honda R&D Co., Ltd, Saitama 351-0193 (JP); Matsuzono, Yoshiaki, c/o Honda R&D Co., Ltd, Saitama 351-0193 (JP); Shinkai, Takahiro, c/o Honda R&D Co., Ltd, Saitama 351-0193 (JP)
(74) Representative: Böhm, Brigitte

(56) References cited:
- EP-A- 1 340 541
- EP-A- 1 364 708
- EP-A- 1 547 675
- US-A- 3 441 381
- US-A- 3 896 616
- US-A1- 2002 187 893
- US-A1- 2003 162 650

## Description

### BACKGROUND OF THE INVENTION

### 1. Field of the Invention

Generally, the present invention relates to exhaust gas purification apparatuses. More specifically, the present invention relates to an exhaust gas purification apparatus which has an enhanced property of purifying exhaust gas from an internal combustion engine for vehicles, and which is configured to decrease the exhaust gas pressure of the engine.

### 2. Description of the Related Art

Document US 3 896 616A discloses an exhaust system comprising two catalysts in series whereby the distance between the engine manifold and the first catalyst can be set to less than 13 cm.

On the other hand document EP 1 364 708A shows an exhaust purifying catalyst having at least two layers. The layers can comprise Pt, Pd and Rh.

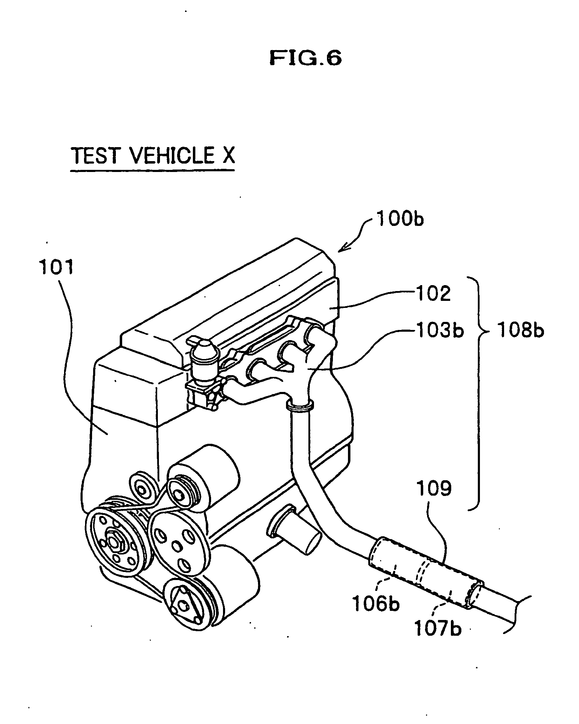

First, with reference to Fig. 6, a description will be given below, of a process for purifying exhaust gas from an engine 100b for a commercial vehicle X.

The engine 100b discharges exhaust gas through cylinders within a cylinder block 101. Subsequently, the exhaust gas flows through an engine head block 102 and an exhaust manifold 103b where multiple exhaust pipes are joined together. Finally, the exhaust gas reaches a catalytic converter 109, and it is purified there.

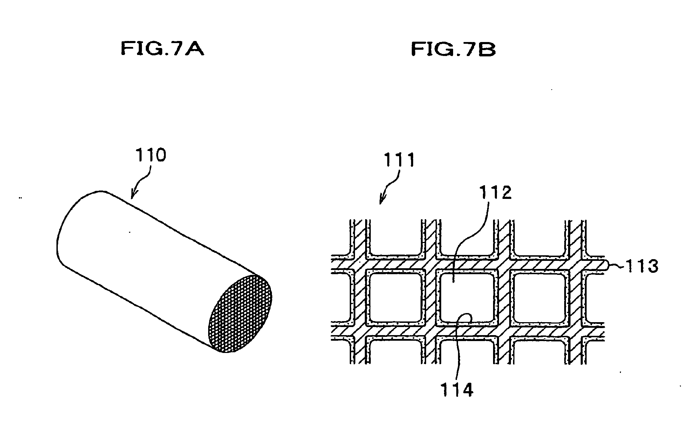

The catalytic converter 109 includes catalysts 106b and 107b. Figs 7A and 7B show the detail of a catalyst of this type. Referring to these figures, an exhaust gas catalyst 110 has a honeycomb structure 111 made of ceramic or metal which includes a catalyst support 113 and a wash coat layer 114. In addition, the wash coat layer 114 supports noble metal, such as platinum (Pt) , palladium (Pd) or rhodium (Rh) , that serves as a catalyst. Specifically, the exhaust gas catalyst 110 is formed by coating and baking the wash coat layer 114 on the honeycomb structure 111 . The catalyst support 113 and the wash coat layer 114 define multiple cells 112. When exhaust gas passes through the cells 112, non methane organic gas (NMOG) and NOx, etc. contained in the exhaust gas are removed.

On the other hand, for the purpose of reducing environmental pollution, regulations against harmful substances such as NMOG and NOx are becoming stringent year by year. To give one example, Partial Zero Emission Vehicle (PZEV) , which has been introduced by California, the U.S.A., is currently one of the strictest regulations for commercial vehicles. Only a handful of vehicles observe this regulation at present. Accordingly, exhaust gas purification apparatuses which exhibit an enhanced property of purifying exhaust gas have been highly in demand.

In order to comply with such strict regulations against harmful substances, various attempts to improve exhaust gas purification apparatuses have been made. Some examples of those attempts are as follows:
1) to enlarge an area where exhaust gas comes into contact with the wash coat layer 114 (of Fig 7B);
2) to grow the number of cells 112 in the honeycomb structure 111, that is, increase the density of the cells in each of the catalysts 106b and 107b; and
3) to raise the amount of the noble metal in the wash coat layer 114.

Thanks to the above attempts, the property of purifying exhaust gas by exhaust gas purification apparatuses has been enhanced.

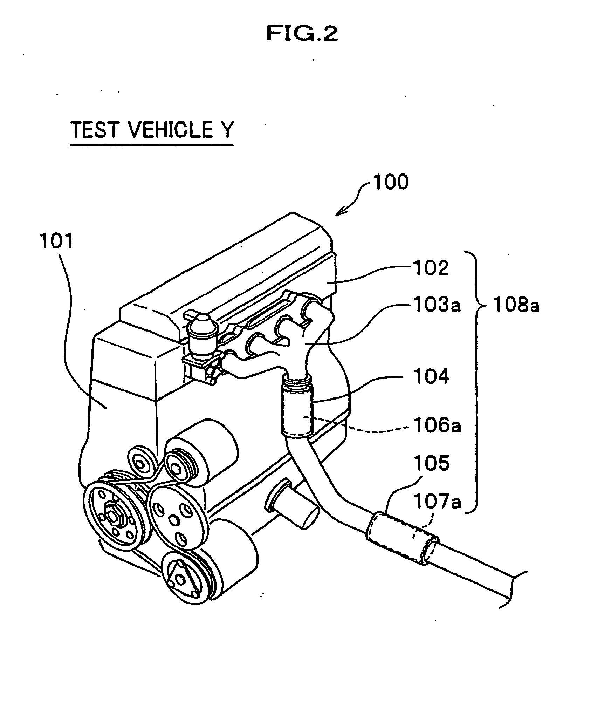

As a result, for example, in a test vehicle Y (see Fig. 2) equipped with an engine of 2.4 litter displacement, one catalyst has 900 cells/in² and the other has 600 cells/in². In addition, the vehicle contains noble metal of 12g.

Moreover, Japanese Unexamined Patent Application Publication 2004-330025 discloses a catalyst provided with a wash coat layer having multiple voids. With these voids presented in the wash coat layer, exhaust gas is diffused widely, and an area where the exhaust gas comes into contact with the catalyst is made large. This results in the improvement of the purification property.

However, when the density of the cells in a catalyst increases for the above reason, the exhaust gas resistance of the catalyst is prone to be high. This may cause the rise in the pressure of the exhaust gas, which lowers the output power of the engine. In addition, an amount of noble metal in a catalyst may increase, thus leading to high manufacturing costs for vehicles.

Moreover, when the catalyst disclosed by JP2004-330025 is applied to exhaust gas purification apparatuses, the property of eliminating NMOG is enhanced to some degree. Meanwhile, the property of removing NOx is not improved significantly (as will be described in detail in this specification).

Taking the above description into account, the present invention has been conceived. An object of the present invention is to provide an exhaust gas purification apparatus for engines, which achieves an improved purification property with a small amount of noble metal, and which is configured to decrease the resistance of exhaust gas.

### SUMMARY OF THE INVENTION

According to the present invention, there is provided, an exhaust gas purification apparatus for purifying exhaust gas from an internal combustion engine for vehicles, including:
a1) an engine head block where multiple exhaust pipes combine, and which has a side on which an exhaust outlet is formed;
a2) a first catalytic converter which holds a first catalyst, and which is to be coupled to a side of the engine head block; a3) a second catalytic converter which holds a second catalyst, and which is coupled to a rear of the first catalytic converter; and
a4) an exhaust pipe which couples the engine head block and the first catalytic converter.
In addition, the first and second catalysts withstand a temperature equal to/more than 800°C.

In the above exhaust gas purification apparatus, the exhaust gas fed to the first catalytic converter is relatively hot. Therefore, the catalytic converter operates at relatively high temperatures. As a result, it is possible to enhance the property of purifying the exhaust gas, as well as to reduce the number of the cells, and decrease the amount of the expensive noble metal. This enables the exhaust resistance of the engine to be lowered.

According to the present invention, there is provided, the exhaust gas purification apparatus in which each of the first and second catalysts includes a catalyst support, a wash coat layer being formed on the catalyst support, and noble metal being supported by the wash coat layer, and the wash coat layer has a thickness equal to/less than 0.2mm.

In the above exhaust gas purification apparatus, the density of the noble metal increases. This enables the purification property to be further enhanced.

Further, the exhaust gas purification apparatus in which the wash coat layer includes a first wash coat layer and a second wash coat layer, and each of the first and second wash coat layers has multiple voids therein.

In the above exhaust gas purification apparatus, the exhaust gas diffuses widely over the cells of the catalyst in each catalytic converter, thereby enlarging the area where the exhaust gas comes into contact with the wash coat layer. This enables the purification property to be still further enhanced.

Other aspects, features and advantages of the present invention will become apparent upon reading the following specification and claims when taken in conjunction with the accompanying drawings.

### BRIEF DESCRIPTION OF THE DRAWINGS

For more complete understanding of the present invention and the advantages hereof, reference is now made to the following description taken in conjunction with the accompanying drawings wherein:
Fig. 1 is a perspective view depicting an exhaust gas purification apparatus according to the present invention, which is to be applied to an internal combustion engine for vehicles;
Fig. 2 is a perspective view depicting an exhaust gas purification apparatus in an internal combustion engine for a test vehicle Y;
Fig. 3 is a cross-section view of a catalyst in an exhaust gas purification apparatus of the invention;
Fig. 4 is a graph and a table which both show a test result (an amount of NMOG) of Examples and Comparative examples of the exhaust gas purification apparatus according to the invention;
Fig. 5 is a graph and a table which both show a test result (an amount of NOx) of Examples and Comparative examples of the exhaust gas purification apparatus according to the invention;
Fig. 6 is a perspective view depicting an exhaust gas purification apparatus in an internal combustion engine for a test vehicle X;
Fig. 7A is a perspective view depicting a catalyst supported by a catalytic converter apparatus; and
Fig. 7B is an enlarged cross-section view of an internal structure of the catalyst.

### DETAILED DESCRIPTION OF THE EXEMPLARY EMBODIMENTS OF THE INVENTION

First, a description will be given, of structures of exhaust gas purification apparatuses according to the present invention. Second, their behaviors and effects will be explained.

### <Structure of Exhaust gas purification apparatus of the invention>

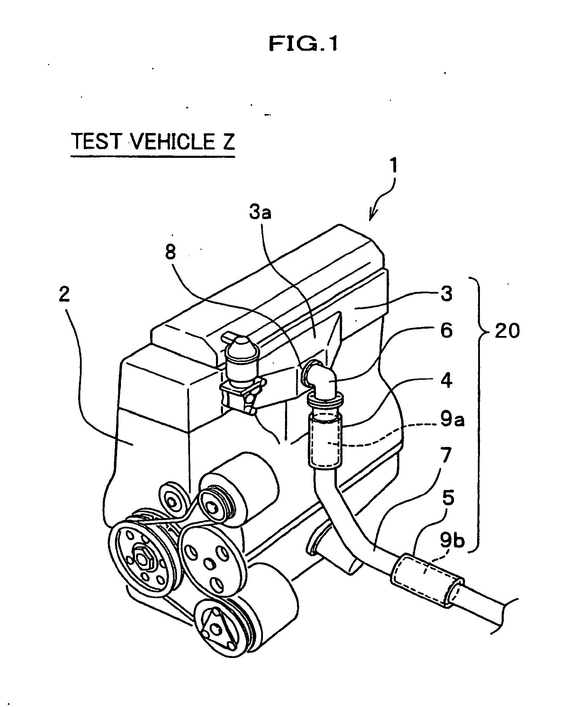

A description will be given below, of a structure of an exhaust gas purification apparatus according to a first embodiment of the present invention, with reference to Figs. 1 to 3.

Referring to Fig. 1, an exhaust gas purification apparatus 20, which is applied to an engine 1, includes an engine head block 3, a first catalytic converter 4 holding a catalyst 9a and being coupled to a side of the engine, a second catalytic converter 5 holding catalyst 9b and being attached to a rear of the first catalytic converter.4, and exhaust pipes 6 and 7.

The engine head block 3 is secured through a gasket to an upper portion of the cylinder block 2 that contains cylinders of the engine, thus defining an upper structure of the cylinders. In addition, the engine head block 3 accommodates intake and exhaust breather valves, camshaft (not shown) , etc. On the engine head block 3, an upper wall over the cylinders is formed, and exhaust pipes connected to the corresponding cylinders are arranged beneath the upper wall. The exhaust pipes combine to form a single space within the engine head block 3, and a single exhaust outlet 8 is formed on an extruded portion 3a on the side of the engine head block 3.

On the other hand, a conventional engine head block differs from the engine head block 3, in that the exhaust pipes do not combine therein, and multiple exhaust outlets are formed on the side of the engine head block.

The engine head block 3 is formed, for example, by a casting. In this case, the portion where the exhaust pipes combine within the engine head block 3 is formed by an inner mold of a casting.

The exhaust pipe 6 has an L shape, and couples the engine head block 3 to the first catalytic converter 4. On the exhaust pipe 6, the distance between each cylinder and the first catalytic converter 4 is shorter than that of an exhaust manifold 103b (see Fig. 6). In the exhaust manifold 103b, in order to join four exhaust pipes together, .the exhaust pipe needs to be longer than a predetermined length, for example, equal to/more than 200mm. In contrast, the exhaust pipe 6 does not have such limitation. Thus, the exhaust pipe 6 can be shorter than that of the exhaust manifold 103b. In the invention, the length of the exhaust pipe 6 is equal to/less than 200mm. Hence, the first catalytic converter 4 can be positioned close to a side of the engine 1. The first catalytic converter 4 and a second catalytic converter 5 to which the first catalytic converter 4 is coupled through an exhaust pipe 7 are adapted to be arranged under a floor of a vehicle.

Since the exhaust system of a test vehicle Z is disposed inside the engine head block 3, the distance between each cylinder in the cylinder block 2 and the first catalytic converter 4 can be short. This makes it possible to reduce the heat dissipation of the exhaust gas, thus raising the temperature of the first catalytic converter 4. Consequently, a catalyst 9a held by the first catalytic converter 4 operates at high temperatures, so that the property of purifying the exhaust gas by the catalyst 9a is enhanced.

In an exhaust system of a commercial vehicle X of Fig. 6, exhaust gas from an engine head block 102 passes through an exhaust manifold 103b and, then reaches a catalytic converter 109 to be located under a floor. The heat dissipation of the exhaust gas between the engine head block 102 and the catalytic converter 109 is deemed to be great. In this case, the temperature of the catalyst 106b could not be high. In other words, the purification property of the catalyst 106b cannot be sufficiently exhibited.

Referring to Fig. 2, the exhaust gas purification apparatus 108a for the test vehicle Y is used as a comparative example of the exhaust gas purification apparatus 20 for the test vehicle Z. In the engine 100 for the test vehicle Y, the exhaust gas from the cylinders in a cylinder block 101 passes through an exhaust manifold 103a where exhaust pipes combine. Then, the exhaust gas is fed to a first catalytic converter apparatus 104 holding a catalyst 106a, and then, to the second catalytic converter apparatus 105 holding the catalyst 107a. In this case, since the first catalytic converter apparatus 104 is positioned close to a jointed end of the exhaust manifold 103a, the distance between the engine head block 102 and the first catalytic converter apparatus 104 is relatively short. However, it is still longer than that of the exhaust gas purification apparatus 20 shown in Fig. 1. The length of the exhaust manifold 103a is, for example, more than 200mm. The heat dissipation of the exhaust gas between the engine head block 102 and the first catalytic converter apparatus 104 is smaller than that between the engine head block 102 and the catalytic converter 109 as shown in Fig. 6. However, it is still higher than that in the exhaust gas purification apparatus 20 of Fig. 1. Accordingly, the catalyst 106a held by the first catalytic converter apparatus 104 cannot have the same temperature as or higher temperature than that of the catalyst 9a supported by the first catalytic converter 4 of the invention as shown in Fig. 1. Thus, it can be considered that the exhaust gas purification apparatus 20 is superior to the exhaust gas purification apparatus 108a.

Referring to Fig. 1, in the exhaust gas purification apparatus 20 for the test vehicle Z, the first catalytic converter 4 and the second catalytic converter 5 hold the catalysts 9a and 9b, respectively.

In the catalysts . 106a and 107a of Fig. 2, the number of the cells per square inch is, for example, 900 and 600, respectively. In contrast, each of the catalysts 9a and 9b in the exhaust gas purification apparatus 20 can have the fewer cells. This makes it possible to lower the exhaust gas pressure of the apparatus 20. The reason why the number of the cells in the catalysts 9a and 9b can decrease is due to the arrangement where the first catalytic converter 4 is located close to the engine 1 and the improvement of the catalysts as will be described later.

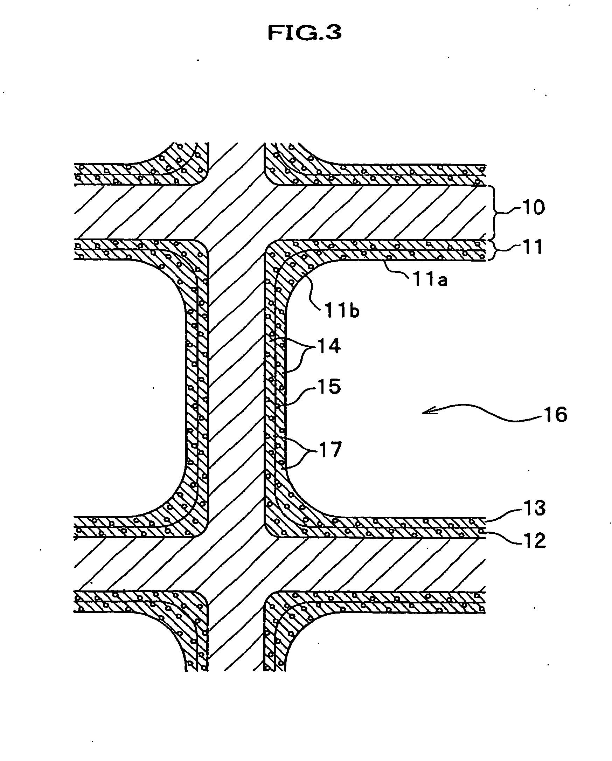

Referring to Fig. 3, a catalyst corresponds to any of the catalysts 9a and 9b in the exhaust gas purification apparatus 20 as shown in Fig. 1. The wash coat layer 11 in a cell 16 has a function of a catalyst, and it is formed on a catalyst support 10 having a honeycomb structure. The wash coat layer 11b on a corner is thicker than the wash coat layer 11a on a line. The wash coat layer 11a is 0.06mm in average thickness. The wash coat layer 11b is 0.15mm in average thickness and 0.2mm in maximum thickness. The wash coat layer 11 is about 30% thinner than the wash coat layer of the catalysts 106a and 107a of catalytic converter 109 (see Fig. 6) or of the first and second catalytic converter apparatuses 104 and 105 (see Fig. 2).

The wash coat layer 11 of each of the catalysts 4 and 5 is composed of two wash coat layers; one is a first wash coat layer 12 formed on the catalyst support 10 and the other is a second wash co.at layer 13 formed on the first wash coat layer 12. Each of the first and second wash coat layers 12 and 13 is formed of a porous structure 14 of which main component includes aluminum oxide (alumina), zirconium oxide (zirconia), and ceric oxide (ceria). The porous structure 14 supports noble metal 17 made of at least one of Pt, Pd and Rh. This noble metal 17 serves as a catalyst.

A porous structure 14 forming the first and second wash coat layers 12 and 13 has multiple voids, that is, spaces therein. Each void 15 is 0.004mm±0.002mm in diameter. The voids occupy about 20% of each whole volume of the first and second wash coat layers 12 and 13. However, this occupancy ratio is not limited to 20%. In this embodiment, the occupancy ratio of the voids may range from 10% to 60%. These voids 15 contribute to the diffusing of the exhaust gas, and to the improvement of the purification property. Thanks to the voids 15, the noble metal 17 are exposed to the cell 16 sufficiently. Hence, the ratio of the noble metal 17 which serves as a catalyst is made high, thus leading to the advancement of the purification property. On the other hand, the wash coat layer of the catalysts 106a and 107a of Fig. 2 has no voids.

Sintered alumina in the porous structure 14 (see Fig. 3) is stable at high temperatures and has a large surface area. Therefore, the noble metal 17 is distributed widely in the porous structure 14. Consequently, a ratio at which the noble metal 17 serves as a catalyst in the wash coat layer 11 is relatively high. This enables the purification property of the catalysts 9a and 9b to be made relatively high.

Ceria in the porous structure 14 has the oxidation-reduction property, depending on the valence of ceria ions contained therein. If oxygen excessively resides in exhaust gas, then ceria decreases the oxygen partial pressure by being coupled to the oxygen atoms in the excess oxygen. Meanwhile, if a small amount of oxygen is contained in exhaust gas, then the oxygen atoms coupled to ceria is liberated, thereby increasing the oxygen partial pressure in the exhaust gas. Such a property of ceria reduces the rapid change in the oxygen partial pressure of the exhaust gas, in the case where the catalytic converter apparatus 1 is applied to an engine that controls an air-fuel ratio based on stoichiometry (e.g. stoichiometry type engine). As a result, the oxygen partial pressure in the exhaust gas is kept at a certain level at which reducing hydrocarbon, nitric oxide and oxidizing nitrogen oxides are removed at the same time.

Zirconia in the porous structure 14 has a property of enhancing the thermal stability of ceria. Due to this property, the oxidation-reduction property of ceria is maintained, even if the porous structure 14 of the wash coat layer 11 is exposed to high temperatures for a long time.

The noble metal 17 on the first wash coat layer 12 in the catalyst 4 is the same as that of the first wash coat layer 12 in the catalyst 5. Specifically, barium (Ba) and palladium (Pd) are held by the above porous structure 14. In this case, Ba acts to enhance the thermal stability of Pd, while preventing the rough enlargement of Pd particles.

On the other hand, the noble metal 17 of the second wash coat layer 12 in the catalyst 4 is different from that of the second wash coat layer 12 in the catalyst 5. The noble metal 17 on the second wash coat layer 13 of the catalyst 4 is Rh, while the noble metal 17 on the second wash coat layer 13 of the catalyst 5 is Pt and Rh.

As described above, the wash coat layer 11 of the catalysts 9a and 9b held by the exhaust gas purification apparatus 20 is about 30% thinner than the wash coat layer of the catalysts 106a and 107a of Fig. 2. Hence, the density of the noble metal 17 in the catalysts 9a and 9b is greater than that in the catalysts 106a and 107a. Thus, the purification property of the catalysts 9a and 9b is more excellent than that of the catalysts 106a and 107a. Since the wash coat layer 11 is thin, the ratio at which the aperture occupies the cell 16 in the catalysts 9a and 9b is great. Accordingly, the exhaust resistance of the catalysts 9a and 9b is lower than that of the catalysts 106a and 107a.

The wash coat layer 11 is fabricated by the following process. Material powder for the porous structure 14, component of the noble metal 17 and pyrolytic or flammable spherical molding body are dispersed into a solvent (e.g. water), thereby forming a slurry. Note that a material of the molding body includes foaming resin and activated charcoal. Next, a honeycomb base material made of cordierite, which is to make up the catalyst support 10, is dipped into the ,slurry. Following this, it is taken away therefrom and dried. Finally, the base material is sintered, thereby forming the first wash coat layer 12 on the catalyst support 10. The density of the slurry is adjusted such that the wash coat layer has a predetermined thickness. While being sintered, the molding body is decomposed, whereby the voids 15 are formed in the first wash coat layer 12. By repeating the above process, the second wash coat layer 13 having the voids 15 is also formed on the first wash coat layer 12. The catalyst fabricated by the above processes withstands a temperature equal to/more than 800°C, because all materials thereof have high thermal resistance.

In the exhaust gas purification apparatus 20 of this embodiment, the exhaust gas fed to the first catalytic converter 4 has a higher temperature than that of the apparatus 108a (Fig. 2) or 108b (Fig. 6) . Accordingly, the first catalytic converter 4 needs to possess a higher heat resistance. Preferably, it is equal to/more than 800°C.

### <Structure of Exhaust gas purification apparatus of Second Embodiment>

Next, a description will be described below, of a structure of an exhaust gas purification apparatus according to an example, which is not part of the present invention.

An exhaust system of this apparatus is similar in structure to that of the apparatus of the invention. Specifically, a structure and an arrangement of the engine head block 3, the exhaust pipes 6 and 7 and the first and second catalytic converter apparatuses 4 and 5 are identical to each other. However, catalysts in the apparatus of this example are identical to the catalysts 106a and 107a in the apparatus 100 of Fig. 2. Thus, the wash coat layer in the apparatus of the second embodiment is not thinner. In addition, the wash coat layer has no voids. Consequently, the exhaust gas purification apparatus of this embodiment includes the catalysts 106a and 107a of Fig. 2 instead of the catalysts 9a and 9b of Fig. 1.

Next, a detailed description will be given below, of behavior and effect of the catalytic converter apparatus 1 according to the invention and of this example.

The purification property of the catalytic converter apparatus 1 was evaluated by amounts of NMOG and NOx. In addition, the purification property was tested based on the following three parameters.
1) CT (mg/km):
   Started up an engine of a vehicle;
   Ran the vehicle over a predetermined distance while the engine was cool;
   Measured an amount of residual harmful substance contained in exhaust gas from the engine; and
   Corrected the measured amount by multiplying it by a predetermined constant, thereby determining CT. Note that the predetermined constant was determined according to a certain driving condition of "cool start" in the modeled driving for evaluating the exhaust system.
2) CS (mg/km):
   Started up and warmed up an engine of a vehicle;
   Ran the vehicle over a predetermined distance after the engine was completely warmed;
   Measured an amount of residual harmful substance contained in exhaust gas from the engine; and
   Corrected the measured amount by multiplying it by a predetermined constant, thereby determining CS. Note that the predetermined constant was determined according to a certain driving condition of "warm start" in the modeled driving for evaluating the exhaust system.
3) HT (mg/km):
   Started up and warmed up an engine of a vehicle;
   Stopped the engine after the engine was completely warmed;
   Started up the engine again;
   Ran the vehicle over a predetermined distance while the engine was warm;
   Measured an amount of residual harmful substance contained in exhaust gas from the engine; and
   Corrected the measured amount by multiplying it by a predetermined constant. Note that the predetermined constant was determined according to a certain driving condition of "warm re-start" in the modeled driving for evaluating the exhaust system.

The sum of these parameters "CT+CS+HT" was defined as a reference for determining an amount of harmful substance. By using this parameter, the purification properties of Examples and Comparative examples were determined. As the value "CT+CS+HT" was lower, the purification property was considered to be superior.

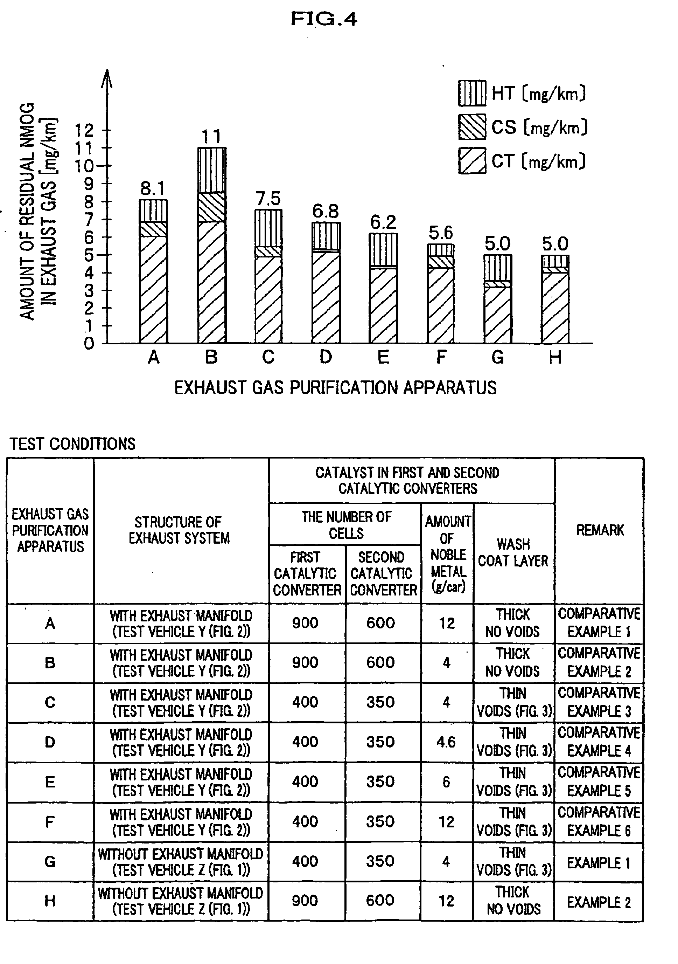

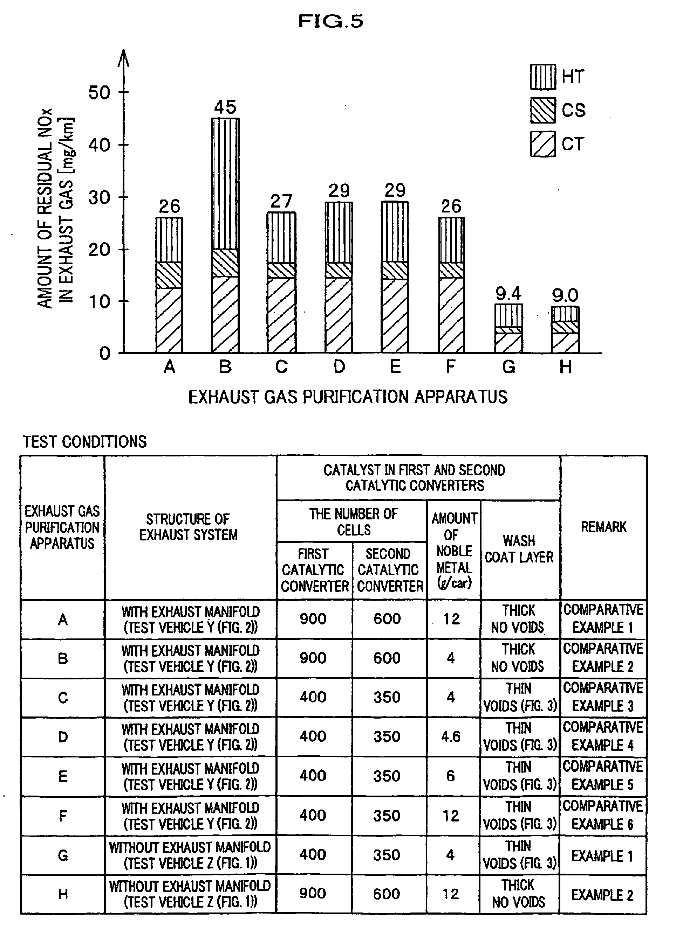

Figs. 4 and 5 show results of testing amounts of residual NMOG and NOx in exhaust gas from the engine equipped with apparatuses of examples and comparative examples, respectively.

In Figs. 4 and 5, an apparatus of an Example according to the invention (hereinafter, called an "Example 1") corresponded to an exhaust gas purification apparatus G. An apparatus of an Example which is not part of the invention (hereinafter, called an "Example 2") corresponded to an exhaust gas purification apparatus H. In addition, the Example 1 was equivalent to the exhaust gas purification apparatus 20 for the test vehicle Z of Fig. 1.. Comparative examples 1 to 6 corresponded to the exhaust gas purification apparatuses A to F, respectively. The Comparative example 1 was equivalent to the exhaust gas purification apparatus 108a for the test vehicle Y of Fig. 2. The wash coat layer of the Comparative example 1 was thicker than that of the Example 1. Furthermore, the wash coat layer of the Comparative example 1 had no voids therein. The Comparative example 1 had more cells than those of the Example 1, and held much noble metal than that of the Example 1.

It is clear from the results of Figs. 4 and 5 that the Example 1 (exhaust gas purification apparatus G) and the Example 2 (exhaust gas purification apparatus H) exhibit a more excellent property of removing NMOG and NOx than that of the Comparative example 1 (exhaust gas purification apparatus A). Moreover, the Example 1 enables an exhaust gas pressure to be made lower than the Comparative example 1 does, as well as holds less noble metal than the Comparative example 1 does.

The Comparative example 2 was different from the Comparative example 1 in an amount of the noble metal. Specifically, the Comparative example 1 held the noble metal of 12g, while the Comparative example 2 held the noble metal of 4g. Considering the result of the Comparative examples 1 and 2 in Figs. 4 and 5, the amount of the noble metal in the Comparative example 1 cannot decrease without degrading its purification property.

The Comparative examples 3 to 6 (exhaust gas purification apparatuses C to F) had an identical exhaust system to that of the Comparative example 1 or 2. Specifically, it had a system equipped with the exhaust manifold 103a. However, the Comparative examples 3 to 6 had the improved wash coat layer 11 shown in Fig. 3, and their cells were as many as those in the Example 1. Among the Comparative examples 3 to 6, the amounts of the noble metal were different from one another. They varied a range from 4g to 12g.

The test results of these Comparative examples reveal the following facts.

As for an apparatus having the exhaust system equipped with the exhaust manifold 103a, the amount of NMOG exhausted from the system can be reduced by providing the catalyst with the improved wash coat layer. (of Fig. 3) and by increasing the amount of the noble metal in the catalyst. However, even though the catalyst with the improved wash coat layer is used and the amount of the noble metal in the catalyst increases, the amount of NOx from the system with the exhaust manifold cannot be reduced.

In conclusion, in order to decrease the amounts of both NMOG and NOx in the exhaust gas from an apparatus, the exhaust system without the exhaust manifold must be applied to the apparatus.

In addition, by applying the improved catalysts to the apparatus, the number of the cells in the catalysts can decrease. This makes it possible to lower the exhaust gas pressure of the apparatus and to decrease the amount of the noble metal in the catalysts.

As described above, the effect achieved by the exhaust system without the exhaust manifold is due to the high temperature of the exhaust gas fed to the first catalytic converter. Actually, temperatures of the different catalysts were measured. The measuring result was shown in a table 1.

**TABLE 1**

| SAMPLE | 20sec after starting system with being cool | 20sec after re-starting system with being warm |
|---|---|---|
| COMPARATIVE EXAMPLE 1 | 410°C | 359°C |
| EXAMPLE 1 | 442°C | 402°C |

According to the table 1, the temperature of the Example 1 was greater than that of the Comparative example 1 by 30°C or more.

Therefore, it proves that the purification property of the exhaust gas purification apparatus of the invention or of the examples which is not part of the invention is attributed to the high temperature of the first catalytic converter 4.

In view of the above result, with the exhaust gas purification apparatus of the invention or the example which is not part of the invention, the purification property can be improved. In addition, the exhaust gas purification apparatus of the invention makes it possible to lower the exhaust gas pressure, and to decrease the amount of the noble metal supported by the catalyst.

Note that the decrease in the exhaust gas pressure results in the improvement of the output performance of engines, that is, the enhancement of the commercial value of vehicles.

Be sure to note that the present invention is not limited to the aspects of the Example 1.

The Example 1 (exhaust gas purification apparatus A) included the first catalytic converter of the 400 cells/in² and the second catalytic converter of 350 cells/in ² In addition, the Example 1 had the noble metal of 4g. However, the present invention is not limited to this configuration. It is obvious that the number of the cells or the amount of the noble metal in exhaust gas purification apparatuses can be varied without departing from the scope of the claims.

## Claims

1. An exhaust gas purification apparatus for purifying exhaust gas from an internal combustion engine for vehicles, said exhaust gas purification apparatus comprising:
an engine head block inside which a plurality of exhaust pipes combine to form a single collective exhaust gas flow passage space, the engine head block having a side on which a single collective exhaust outlet to which the single collective exhaust gas flow passage space leads is formed;
a first catalytic converter for holding a first catalyst, the first catalytic converter being to be coupled to the single collective exhaust outlet;
a second catalytic converter for holding a second catalyst, the second catalytic converter being coupled to a rear of the first catalytic converter;
an exhaust pipe as long as or shorter than 200 mm for coupling the single collective exhaust outlet and the first catalytic converter; and
the first and second catalysts withstanding a temperature equal to/more than 800°C,
wherein each of the first and second catalysts comprises a catalyst support, a wash coat layer being formed on the catalyst support, and a noble metal being supported by the wash coat layer, and the wash coat layer has a thickness equal to/less than 0.2 mm,
wherein the wash coat layer comprises a first wash coat layer and a second wash coat layer, and each of the first and second wash coat layers includes aluminum oxide, zirconium oxide and cerium oxide and has a plurality of voids therein, and
wherein Ba and Pd are supported by the first wash coat layer and at least Rh is supported by the second wash coat layer.

2. The exhaust gas purification apparatus according to claim 1, wherein Pt is supported in addition to the Rh by the second wash coat layer in the second catalyst.

3. The exhaust gas purification apparatus according to any of claims 1 and 2, wherein each of voids 0.004 mm +/- 0.002 mm in diameter.

4. The exhaust gas purification apparatus according to any of claims 1 and 2, wherein the voids occupy 10% to 60% of a whole volume of each of the first and second wash coat layers.

## Patentansprüche

1. Abgasreinigungsvorrichtung zur Reinigung von Abgas aus einem Verbrennungsmotor für Fahrzeuge, wobei die Abgasreinigungsvorrichtung umfasst:
einen Motorkopfblock, in dem eine Vielzahl an Abgasrohren kombiniert sind, um einen einzigen gemeinsamen Bereich eines Abgasströmungsdurchlasses zu bilden, wobei der Motorkopfblock eine Stelle besitzt, an der ein einziger gemeinsamer Auslass, zu dem der einzige gemeinsame Bereich eines Abgasströmungsdurchlasses führt, gebildet wird;
einen ersten katalytischen Konverter, der einen ersten Katalysator aufweist, wobei der erste katalytische Konverter an den einzigen gemeinsamen Abgas-Auslass gekoppelt ist;
einen zweiten katalytischen Konverter, der einen zweiten Katalysator aufweist, wobei der zweite katalytische Konverter an einen hinteren Teil des ersten katalytischen Konverters gekoppelt ist;
ein Abgasrohr, das so lang ist wie 200 mm oder kürzer, zum Koppeln des einzigen gemeinsamen Abgas-Auslasses und des ersten katalytischen Konverters; und
wobei die ersten und zweiten Katalysatoren einer Temperatur gleich zu/mehr als 800°C widerstehen,
wobei jeder der ersten und zweiten Katalysatoren einen Katalysator-Träger, eine Washcoat-Schicht, die auf dem Katalysator-Träger gebildet wird, und ein Edelmetall, das durch die Washcoat-Schicht geträgert wird, umfasst, und wobei die Washcoat-Schicht eine Dicke gleich zu/weniger als 0,2 mm
aufweist,
wobei die Washcoat-Schicht eine erste Washcoat-Schicht und
eine zweite Washcoat-Schicht umfasst, und jede der ersten und
zweiten Washcoat-Schichten Aluminiumoxid, Zirconiumoxid und
Ceriumoxid einschließt und eine Vielzahl an Lücken darin aufweist, und
wobei Ba und Pd durch die erste Washcoat-Schicht geträgert werden und mindestens Rh durch die zweite Washcoat-Schicht geträgert wird.

2. Abgasreinigungsvorrichtung nach Anspruch 1, wobei Pt zusätzlich zu dem Rh durch die zweite Washcoat-Schicht in dem zweiten Katalysator geträgert wird.

3. Abgasreinigungsvorrichtung nach einem der Ansprüche 1 und 2, wobei jede der Lücken 0,004 mm ± 0,002 mm im Durchmesser ist.

4. Abgasreinigungsvorrichtung nach einem der Ansprüche 1 und 2, wobei die Lücken 10% bis 60% eines Gesamtvolumens jeder der ersten und zweiten Washcoat-Schichten einnehmen.

## Revendications

1. Appareil de purification des gaz d'échappement pour purifier les gaz d'échappement d'un moteur à combustion interne pour véhicules, ledit appareil de purification des gaz d'échappement comprenant :
un bloc culasse de moteur à l'intérieur duquel une pluralité de tuyaux d'échappement se combinent pour former un espace de passage d'écoulement de gaz d'échappement collectif unique, le bloc culasse de moteur ayant un côté sur lequel une sortie d'échappement collectif unique à laquelle conduit l'espace de passage d'écoulement de gaz d'échappement collectif unique est formée ;
un premier convertisseur catalytique pour contenir un premier catalyseur, le premier convertisseur catalytique devant être couplé à la sortie d'échappement collectif unique ;
un second convertisseur catalytique pour contenir un second catalyseur, le second convertisseur catalytique devant être couplé à l'arrière du premier convertisseur catalytique ;
un tuyau d'échappement aussi long que ou plus court que 200 mm pour coupler la sortie d'échappement collectif unique et le premier convertisseur catalytique ; et
les premier et second catalyseurs supportant une température égale à/supérieure à 800 °C,
dans lequel chacun des premier et second catalyseurs comprend un support catalytique, une couche de revêtement verso qui est formée sur le support catalytique, et un métal noble qui est supporté par la couche de revêtement verso, et la couche de revêtement verso a une épaisseur égale à/inférieure à 0,2 mm,
dans lequel la couche de revêtement verso comprend une première couche de revêtement verso et une seconde couche de revêtement verso, et chacune des première et seconde couches de revêtement verso comprend de l'oxyde d'aluminium, de l'oxyde de zirconium et de l'oxyde de cérium et renferme une pluralité de vides, et
où Ba et Pd sont supportés par la première couche de revêtement verso et au moins Rh est supporté par la seconde couche de revêtement verso.

2. Appareil de purification des gaz d'échappement selon la revendication 1, dans lequel Pt est supporté en plus de Rh par la seconde couche de revêtement verso dans le second catalyseur.

3. Appareil de purification des gaz d'échappement selon l'une quelconque des revendications 1 et 2, dans lequel chacun des vides a un diamètre de 0,004 mm ± 0,002 mm.

4. Appareil de purification des gaz d'échappement selon l'une quelconque des revendications 1 ou 2, dans lequel les vides occupent 10 % à 60 % d'un volume total de chacune des première et seconde couches de revêtement verso.
